# EUROPÄISCHE PATENTSCHRIFT

(11) **EP 3 708 282 B1**
(45) Veröffentlichungstag und Bekanntmachung des Hinweises auf die Patenterteilung: **04.05.2022**
(21) Anmeldenummer: 19162792.6
(22) Anmeldetag: 14.03.2019
(51) Int. Cl.: B23C 5/08, B23C 5/14

(54) **RINGFÖRMIGES WERKZEUG ZUR BEARBEITUNG EINES WERKSTÜCKS**
ANNULAR TOOL FOR MACHINING A WORKPIECE
OUTIL ANNULAIRE DESTINÉ À L'USINAGE D'UNE PIÈCE À USINER

(43) Veröffentlichungstag der Anmeldung: 16.09.2020
(73) Patentinhaber: Haertel, Meiko, 58256 Ennepetal (DE)
(72) Erfinder: Meiko Haertel, 58256 Ennepetal (DE)
(74) Vertreter: Richardt Patentanwälte PartG mbB

(56) Entgegenhaltungen:
- EP-A1- 1 063 040
- WO-A1-2014/072134
- FR-A- 425 526
- JP-A- S6 020 815
- US-A- 3 079 669
- US-A- 3 678 554

## Beschreibung

Die Erfindung betrifft ein ringförmiges Werkzeug zur Bearbeitung eines Werkstücks gemäß dem Oberbegriff des Anspruchs 1 sowie die Verwendung eines solchen Werkzeugs, insbesondere zur Ausarbeitung einer Hohlkehle sowie zur Bearbeitung einer der Hohlkehle vorgelagerten Fläche. Ein ringförmiges Werkzeug mit den Merkmalen des Oberbegriffs des Anspruchs 1 ist aus der WO 2014/072134 A1 bekannt.

Zur spanenden Bearbeitung von Werkstücken sind aus dem Stand der Technik u.a. Fräsmaschinen bekannt, die analog zu Werkzeugmaschinen mit unstrukturiertem Werkzeug (z.B. Trennschleifern, Winkelschleifern) dazu ausgebildet sind, mit einem rotierenden Fräsring senkrecht zur Drehachse in das Werkstück einzutauchen und daraus Material in einer zur Oberfläche des Werkstücks nicht parallelen Richtung (typischerweise senkrecht zur Oberfläche) abzutragen. Dieser Maschinentyp wird nachfolgend als "Tiefenfräser" bezeichnet, der entsprechend strukturierte Schneidring als "Tiefen-Fräsring".

Ein Beispiel für einen Tiefenfräser ist der Schweißnahtwurzelöffner, der zum fräsenden Abtragen einer Schweißnaht verwendet werden kann. Der Tiefen-Fräsring eines Schweißnahtwurzelöffners weist an seiner radialen Außenkante (hierin auch als Kopfbereich bezeichnet) Schneidezähne auf (Außenverzahnung), um in einer durch die Geometrie des Tiefen-Fräsrings festgelegten Fräskerbe Material aus der Tiefe des Werkstücks abzutragen. Um eine saubere Bearbeitung der Seitenwände der Fräskerbe zu ermöglichen, können die Zähne an den Seitenflächen des Tiefen-Fräsrings fortgeführt sein.

Des Weiteren sind aus dem Stand der Technik Fräsmaschinen bekannt, die analog zu Werkzeugmaschinen mit unstrukturiertem Werkzeug (z.B. Tellerschleifern, Exzenterschleifern) dazu ausgebildet sind, mit einem rotierenden Fräsring parallel zur Drehachse auf das Werkstück aufzusetzen und Material parallel zur Oberfläche des Werkstücks (senkrecht zur Drehachse) flächig abzutragen. Dieser Maschinentyp wird nachfolgend als "Flächenfräser" bezeichnet, der entsprechend strukturierte Schneidring als "Flächen-Fräsring". Ein Flächen-Fräsring weist dazu Schneidezähne an der Seitenfläche (hierin auch als Stirnbereich bezeichnet) auf (Flächenverzahnung), die zur Bearbeitung mit der Werkstückoberfläche in Kontakt gebracht wird. Ein Flächenfräser kann z.B. zum Vorbereiten einer Schweißnahtkante oder zum Abfräsen überstehenden Materials einer Schweißnaht verwendet werden.

Die Grenze zwischen Kopfbereich und Stirnbereich ist hierin für jeden Zahn definiert als der Punkt auf der Schneidkante, dessen Tangentialebene die Mittenebene des Rings (welche eine minimale Summe der Abstandsquadrate über alle Scheitelpunkte aufweist) in einem Winkel von 45 Grad schneidet.

Aufgrund von Unterschieden im Aufbau der Fräsringe und der Struktur der Schneidezähne ist eine Verwendung eines Flächen-Fräsrings zur nicht oberflächenparallelen Bearbeitung eines Werkstücks in der Art eines Tiefen-Fräsrings bzw. eine Verwendung eines Tiefen-Fräsrings zur oberflächenparallelen Bearbeitung eines Werkstücks in der Art eines Flächen-Fräsrings nicht möglich. Gründe dafür können beispielsweise das Fehlen einer Schneidwirkung in der gewünschten Fräsrichtung oder eine ungeeignete Abführrichtung der Späne sein.

Demgegenüber liegt der Erfindung die Aufgabe zugrunde, ein verbessertes ringförmiges Werkzeug zur Bearbeitung eines Werkstücks sowie ein Verfahren zur Verwendung eines solchen Werkzeugs zu schaffen. Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Erläuterungen technischer Wirkungen des beschriebenen Werkzeugs sowie dessen Verwendungen beziehen sich, soweit nicht anderweitig vermerkt, stets auf eine bevorzugte Verwendung des Werkzeugs bei Einbau in eine Fräsmaschine mit rotierendem Antriebselement (z.B. Elektro- oder Verbrennungsmotor, ggf. mit Getriebe). Ein Einbau des Werkzeugs in eine Handfräse oder eine Roboterfräse ist gleichermaßen möglich.

Des Weiteren beziehen sich die Begriffe "linksschneidend" und "rechtsschneidend" auf die Verwendungssituation, dass das wie zuvor beschrieben eingebaute Werkzeug in der Art eines Tiefen-Fräsrings von oben auf die Oberfläche aufgesetzt wird (d.h. mit der Drehachse nicht senkrecht zu einer ebenen Oberfläche des Werkstücks bzw. nicht senkrecht zu einer durch den Auflagepunkt des Werkzeugs auf der Werkstückoberfläche verlaufenden Tangentialebene), wobei das eingebaute Werkzeug während der Verwendung auf nur einer der beiden Seiten (der "Antriebsseite") mit dem Antriebselement kraftschlüssig verbunden ist. Die Begriffe "linksschneidend" bzw. "rechtsschneidend" sind in dieser Verwendungssituation so definiert, dass das eingebaute Werkzeug seine zerspanende Wirkung auf das Werkstück genau dann entfaltet, wenn es, in Blickrichtung entlang der Drehachse von der Antriebsseite auf das Werkzeug betrachtet, gegen den Uhrzeigersinn bzw. im Uhrzeigersinn rotiert, sodass jeder Zahn von links oben bzw. von rechts oben kommend auf die Oberfläche des Werkstücks trifft. Dreht man hingegen in der beschriebenen Verwendungssituation und Blickrichtung ein Werkzeug mit linksschneidenden Zähnen im Uhrzeigersinn bzw. ein Werkzeug mit rechtsschneidenden Zähnen gegen den Uhrzeigersinn, so tritt im Wesentlichen keine Zerspanung auf.

Ein Zahn der Flächenverzahnung des ringförmigen Werkzeugs weist einen Drall auf, wenn seine Erstreckungsrichtung vom Kopfbereich zum Befestigungsbereich von einem rein radialen Verlauf abweicht. Ausgedrückt in Zylinderkoordinaten würde sich also ein Zahn ohne Drall ausgehend von einem Punkt (r₁, ϕ₁, z₁) im Kopfbereich mit Radius r₁ geradlinig, d.h. mit konstantem Polarwinkel ϕ₁, bis zu einem Punkt (r₂, ϕ₁, z₂) an einem Radius r₂ < r₁ erstrecken. Die Abweichung eines Zahns mit Drall von diesem Verlauf kann beispielsweise gerade (d.h. mit konstanter Steigung in ϕ) oder gekrümmt (mit variabler Steigung in ϕ) verlaufen.

In einem Beispiel ist die Schneidkante jedes Zahns als Kreissegment eines mit dem Mittelpunkt des Rings nicht konzentrischen Kreises gebogen. Liegt ein Zahn mit Drall in einem Auflagepunkt auf einem sich unterhalb des Werkzeugs befindlichen Werkstück auf (Drehachse parallel zur Werkstückoberfläche im Auflagepunkt) und betrachtet man diesen Zahn (auf der dem Betrachter zugewandten Seite des Werkzeugs) aus einer Richtung parallel zur Drehachse, so handelt es sich bei dem Drall um einen Linksdrall, wenn die Erstreckungsrichtung des Zahns, ausgehend vom Auflagepunkt, gegenüber der rein radialen Erstreckung nach links geneigt ist, und um einen Rechtsdrall, wenn die Erstreckungsrichtung des Zahns, ausgehend vom Auflagepunkt, gegenüber der rein radialen Erstreckung nach rechts geneigt ist.

In einem Aspekt der Erfindung wird ein ringförmiges Werkzeug zur Bearbeitung eines Werkstücks bereitgestellt, wobei das Werkzeug einen zu seiner Ringform zentrierten Befestigungsbereich zur Befestigung an einer rotierbaren Antriebsachse aufweist, wobei das Werkzeug Schneidezähne aufweist, wobei sich die Zähne beidseitig des Werkzeugs jeweils vom Kopfbereich des Werkzeugs in Richtung zum Befestigungsbereich hin erstrecken, wobei die Zähne der einen Seite einen Rechtsdrall aufweisen und rechtsschneidend sind und die Zähne der anderen Seite einen Rechtsdrall aufweisen und linksschneidend sind. Durch diese Merkmale könnte das erfindungsgemäße Werkzeug den Vorteil haben, eine zerspanende Bearbeitung eines Werkstücks sowohl als Tiefen-Fräsring als auch als Flächen-Fräsring zu erlauben. Die Wirkung eines Tiefen-Fräsrings könnte durch die Außenverzahnung des Werkzeugs ermöglicht werden, während die Wirkung eines Flächen-Fräsrings durch die Flächenverzahnung des Werkzeugs ermöglicht werden könnte.

Erfindungsgemäß sind die Zähne im Bereich der Flächenverzahnung mit einem Rechtsdrall ausgebildet. Die Ausbildung der Zähne mit einem Drall könnte die radiale Materialabfuhr des abgetragenen Materials unterstützen, so dass das Werkzeug ungehindert kontinuierlich Material abtragen kann. Dadurch werden praktisch keine Verunreinigungen im abgefrästen Bereich hinterlassen, was eine anschließende Bearbeitung, z.B. eine Verschweißung oder Verfüllung, vereinfachen könnte. Die Ausbildung des Dralls als Rechtsdrall könnte bei Verwendung des Werkzeugs als Flächen-Fräsring eine Abführung der Späne in radial auswärts verlaufender Richtung ermöglichen. Die beidseitige Ausbildung des Rechtsdralls könnte die Verwendung des Werkzeugs als Flächen-Fräsring mit der beschriebenen vorteilhaften Spanabführung in beiden Drehrichtungen erlauben. Zudem könnte der beidseitige Rechtsdrall bei Verwendung des Werkzeugs als Tiefen-Fräsring eine verbesserte Laufruhe der Fräsmaschine bewirken.

Die Kombination einer linksschneidenden Zahnstruktur mit Rechtsdrall auf der einen Seite mit einer rechtsschneidenden Zahnstruktur mit Rechtsdrall auf der anderen Seite des Werkzeugs könnte zudem eine Spezialisierung der vorteilhaften dualen Verwendung des Werkzeugs (sowohl als Tiefen- als auch als Flächen-Fräsring) auf einen Einbau in eine Maschine bewirken, die (z.B. normungsbedingt) ausschließlich für einen Rotationsantrieb des Rings im Uhrzeigersinn (in Blickrichtung vom Antrieb längs der Antriebswelle in Richtung des eingebauten Werkzeugs) ausgebildet ist.

Bei Verwendung des Werkzeugs könnte beispielsweise mit der Außenverzahnung eine Fräskerbe in ein Werkstück gearbeitet werden. In einem weiteren Arbeitsschritt könnte mit demselben eingebauten Werkzeug eine Oberfläche des Werkstücks mit der Flächenverzahnung abgefräst werden. In einem weiteren Beispiel könnte das auf ähnliche Weise eingebaute Werkzeug zum Ausfräsen einer Hohlkehle mit der Außenverzahnung und zum Glattfräsen einer der Hohlkehle vorgelagerten Fläche mit der Flächenverzahnung verwendet werden. Die jeweiligen beiden Arbeitsschritte könnten somit ohne Werkzeugwechsel, d.h. in einem einzigen Arbeitsschritt realisiert werden.

Das erfindungsgemäße Werkzeug kann zum Öffnen einer Schweißnaht vorgesehen sein. In einem Beispiel könnte das auf ähnliche Weise eingebaute Werkzeug zum Nacharbeiten einer Schweißnaht mit der Flächenverzahnung sowie zum Ausfräsen der Schweißnaht mit der Außenverzahnung verwendet werden. Aufgrund der besonderen Materialhärte von Schweißnähten und die zum Öffnen der Schweißnaht notwendige Präzision der Werkzeugführung könnte das besagte Werkzeug in besonders guter Weise für diese Arbeit geeignet sein. Trotz der Materialhärte könnte das Werkzeug das Material gleichmäßig aufgrund seiner Schneidgeometrie abtragen und dennoch eine sehr hohe Laufruhe aufweisen, sodass sogar eine Handführung möglich sein könnte. Das Werkzeug könnte eine einfache und präzise Ausarbeitung oder Reinigung von z.B. mehreren Schweißnahtlagen an sehr großen (z.B. tonnenschweren) Bauteilen ermöglichen. Das erfindungsgemäße Werkzeug könnte dazu verwendet werden, durch Ausfräsen einer Hohlkehle mit der Außenverzahnung und Glattfräsen einer der Hohlkehle vorgelagerten Fläche mit der Flächenverzahnung eine Fläche und gleichzeitig eine Anschlusskante des Werkstücks zur Schweißung vorzubereiten.

In einem spezifischeren Beispiel handelt es sich bei dem Werkstück um ein geschweißtes Stahlteil aus einem hochfesten Feinkornstahl z.B. der Streckgrenzenklasse S690 oder S960, der z.B. im Kranbau oder Pressenbau eingesetzt wird. Bei einer Röntgen-Durchstrahlungsprüfung wird ein Fehler in der Schweißnaht entdeckt. Bei klassischer Ausarbeitung der Fehlstelle mit einem Fugenhobel würde der Stahl S690 bzw. S960 einer hohen Wärmebelastung von typischerweise 600 - 800 °C ausgesetzt, wodurch das Material an Festigkeit verlöre. Dies könnte zu Ermüdungsrissen oder Brüchen führen. Eine typische Wärmeentwicklung beim Öffnen einer Schweißnaht in Stahl S690 oder S960 mit einem Tiefen-Fräsring liegt hingegen zwischen 60 und 70 °C.

Gemäß Ausführungsformen der Erfindung ist der Arbeitsbereich des Werkzeugs durch den Kopfbereich und die Seiten gegeben, welche die Zähne aufweisen. Der Arbeitsbereich des Werkzeugs ist hierin definiert als der Bereich, in dem die Zähne in wenigstens einer Drehrichtung eine zerspanende Wirkung entfalten können. Durch Erstreckung des Arbeitsbereichs auf die Seiten, welche die Zähne aufweisen, könnte bei Verwendung als Flächen-Fräsring die Kontaktfläche des Werkzeugs mit dem Werkstück maximiert werden. Dies könnte eine höhere Vorschubgeschwindigkeit des Flächenfräsers ermöglichen. Des Weiteren könnte die genannte Erstreckung des Arbeitsbereichs bei Verwendung als Tiefen-Fräsring eine glattere und gleichmäßigere Ausfräsung der Innenwände der Fräskerbe bewirken. Dies könnte insbesondere relevant sein, wenn die Fräskerbe später durch eine neue Schweißnaht gefüllt werden soll.

Gemäß Ausführungsformen der Erfindung gehen im Kopfbereich jeweils in einem Schnittpunkt die Schneidkante eines Zahns der einen Seite und die Schneidkante eines Zahns der anderen Seite unter einem Winkel von 170 - 180 Grad, gemessen in einer durch den Schnittpunkt gehenden Tangentialebene der Ringform, ineinander über. Die ineinander übergehenden Schneidkanten bilden somit eine zusammenhängende Kante, wodurch bei Verwendung als Tiefen-Fräsring eine glattere und gleichmäßigere Ausfräsung des Scheitelpunkts der Fräskerbe erzielt werden könnte. Der Übergangswinkel von 170 - 180 Grad könnte eine Maximierung der Schneidkraft und somit der Energieeffizienz bewirken.

Gemäß Ausführungsformen der Erfindung weisen die Zähne in axialer Ringrichtung des Werkzeugs eine Bogenform mit einem Scheitelpunkt im Kopfbereich auf, wobei auf einer der Seiten die Bogenform durch zwei konturlos tangential ineinander übergehende Kreise gegeben ist mit einem ersten Kreisradius und einem zweiten Kreisradius, wobei der Kreismittelpunkt für den ersten Kreisradius unterhalb des Scheitelpunkts liegt und wobei der Kreismittelpunkt für den zweiten Kreisradius in radialer Richtung unterhalb des Kreismittelpunkts für den ersten Kreisradius liegt, wobei der erste Kreisradius kleiner ist als der zweite Kreisradius. Durch diese Merkmale könnte das erfindungsgemäße Werkzeug den Vorteil haben, dass eine hochwirksame Schneidgeometrie bereitgestellt werden kann, welche eine Handführung des Werkzeugs in besonders effektiver Weise möglich macht. Durch die Bogenform trifft das Werkzeug zunächst nur mit einer minimalen Kontaktfläche auf das Werkstück, wodurch die vom Werkstück auf das Werkzeug ausgeübten Kräfte klein gehalten werden. Gerade die Verwendung der o.g. Bogenform könnte es somit ermöglichen, einen optimalen Kompromiss zwischen Materialabtrag, Handhabbarkeit und seitlicher Materialabfuhr bereitzustellen. Außerdem könnte durch die Bogenform des Werkzeugs eine mit derselben Bogenform geformte Fräskerbe in das Werkstück gearbeitet werden, welche anschließend wieder in einfacher Weise zugeschweißt werden kann.

Gemäß Ausführungsformen der Erfindung beträgt in radialer Richtung des Werkzeugs der Abstand zwischen den Kreismittelpunkten des ersten Kreisradius und des zweiten Kreisradius zwischen der 0,5- und 0,7-fachen Differenz des ersten Kreisradius und des zweiten Kreisradius. Dadurch könnte ein besonders ruhiges Arbeiten in Folge der leichten Krümmung der Zähne möglich sein.

Gemäß Ausführungsformen der Erfindung liegt das Verhältnis des zweiten Kreisradius zu dem ersten Kreisradius zwischen 10 und 20. Gemäß Ausführungsformen der Erfindung liegt das Verhältnis des zweiten Kreisradius zu dem ersten Kreisradius zwischen 14 und 17. Durch die spezielle Wahl dieses Verhältnisses der Radien könnte eine besonders hohe Laufruhe beim Materialabtrag ermöglicht werden. Nach dem Eindringen des Werkzeugs in das Werkstück könnte sich dabei ein optimaler Kompromiss zwischen dem Materialabtrag an der Kopfseite und dem Stirnbereich des Werkzeugs ergeben. Dies könnte unter anderem dazu führen, dass die durch den Materialabtrag entstehende Wärmeentwicklung am Werkzeug gleichmäßig verteilt ist. Dies könnte die Langlebigkeit des Werkzeugs erhöhen.

Gemäß Ausführungsformen der Erfindung ist der Drall über die Seiten des Werkzeugs hinweg konstant. Damit könnte die Effizienz der Materialabfuhr konstant gehalten werden, unabhängig von der Eintauchtiefe des Werkzeugs in das zu bearbeitende Werkstück. Die Schnittgeschwindigkeit des Werkzeugs könnte damit nahezu gleichbleibend sein, unabhängig von der Eintauchtiefe.

Gemäß Ausführungsformen der Erfindung nimmt für jede der Seiten die Schneidetiefe der jeweiligen Zähne vom Kopfbereich ausgehend in Richtung zum Befestigungsbereich hin stetig ab. Die Schneidetiefe eines Zahns ist hierin definiert als der axiale Abstand (in Richtung der Drehachse) zwischen der Schneidkante (der Außenkante) des Zahns und dem tiefsten Punkt der Rille zwischen dem Zahn und einem benachbarten Zahn dieses Zahns. Eine vom Kopfbereich zum Befestigungsbereich stetig abnehmende Schneidetiefe entspricht somit einem Zahnzwischenraumvolumen, das nahe des Kopfbereichs größer als nahe des Befestigungsbereichs ist. Dies könnte den Vorteil haben, einen verbesserten Spanaustrag zu gewährleisten. Abgefräste Späne sammeln sich in den Rillen zwischen zwei benachbarten Zähnen. Dabei haben nahe des Befestigungsbereichs abgetragene Späne den längsten Austragweg und nahe des Kopfbereichs abgetragene Späne den kürzesten. Da Fräswirkung als unabhängig von der radialen Position angenommen werden kann, nimmt die in den Rillen gesammelte Materialmenge von innen nach außen (von Befestigungsbereich zum Kopfbereich) zu. Das radial auswärts zunehmende Zahnzwischenraumvolumen trägt diesem Umstand Rechnung. Auf diese Weise könnte einer Verstopfung der Zahnzwischenräume und / oder einem Abheben des Werkzeugs vom Werkstück infolge einer Überfüllung der Zahnzwischenräume vorgebeugt werden.

Gemäß Ausführungsformen der Erfindung ist die Schneidetiefe der an den Befestigungsbereich angrenzenden Teile der Zähne um einen Faktor 4 - 6 geringer als die Schneidetiefe der jeweiligen Teile der Zähne im Kopfbereich. Ein relativer Tiefen- bzw. Volumenunterschied in diesem Bereich könnte eine optimale Anpassung an ein typisches Aufkommen an Spanvolumen sein, die einer Überfüllung der Zahnzwischenräume wirksam vorbeugt, ohne die mechanische Stabilität der Zähne durch eine zu große Tiefe der Zwischenräume zu gefährden.

In einem weiteren Aspekt betrifft die Erfindung die Verwendung eines Werkzeugs nach einem der vorigen Ansprüche für den Einsatz bei Handwerkzeugen oder bei spanabhebenden Maschinen, wobei bei dem Einsatz das Werkzeug wahlweise kopfseitig oder mit einer der Seiten auf ein zu bearbeitendes Werkstück aufgebracht wird.

Im Folgenden werden bevorzugte Ausführungsformen der Erfindung anhand der Zeichnungen näher erläutert. Es zeigen:
- Fig. 1: eine perspektivische Ansicht einer ersten Seite eines Werkzeugs mit Antriebsmittel,
- Fig. 2: eine perspektivische Ansicht einer zweiten Seite eines Werkzeugs,
- Fig. 3: eine perspektivische Ansicht eines Kopfbereichs eines Werkzeugs,
- Fig. 4: eine schematische Querschnittsansicht eines Werkzeugs mit Antriebsmittel,
- Fig. 5: eine schematische Ansicht von Verfahrensschritten zur Bearbeitung eines Werkstücks, und
- Fig. 6: eine schematische Ansicht von Verfahrensschritten zur Bearbeitung eines Werkstücks.

Im Folgenden sind einander ähnliche Elemente mit den gleichen Bezugszeichen gekennzeichnet.

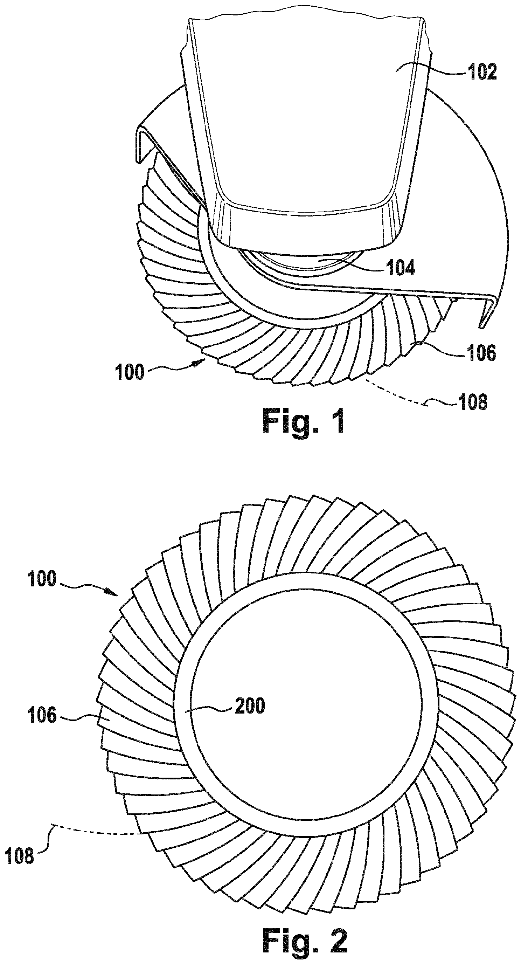

Figur 1 zeigt eine perspektivische Ansicht eines Werkzeugs 100, eingebaut in eine Maschine mit einem Antriebsmittel 102, z.B. eine von Hand führbare Winkelfräsmaschine. Das Antriebsmittel 102 treibt über eine Achse 104 das Werkzeug 100 rotatorisch an. Über Zähne 106 des Werkzeugs kann dieses einen Materialabtrag von einem Werkstück vornehmen. Das Werkzeug 100 weist eine Ringform auf, wobei über den Umfang des Werkzeugs die Zähne 106 angeordnet sind.

In Figur 1 ist in der perspektivischen Seitenansicht der Werkzeugs 100 ersichtlich, dass die Zähne 106 von der der Kopfseite des Werkzeugs ausgehend mit einem gekrümmten Rechtsdrall ausgebildet sind. Die Krümmung 108 erstreckt sich von der Kopfseite über den Stirnbereich. Dies dient der effizienten Materialabfuhr (Spanabfuhr) beim Verwenden des Werkzeugs. Dadurch erhöht sich die Laufruhe des Werkzeugs. Diese könnte weiter dadurch erhöht werden, dass entlang der Krümmung 108 die Zähne regelmäßig oder unregelmäßig unterbrochen sind. In einem Beispiel ist die Krümmung so ausgebildet, dass der Drallwinkel eines Zahns im Kopfbereich gegenüber einer radialen Erstreckung 30 Grad beträgt und bis zum Befestigungsbereich auf 20 Grad abnimmt, d.h. die Krümmung entspricht einer Dralldifferenz von -10 Grad.

In der gezeigten Perspektive sind die Zähne relativ zueinander so strukturiert, dass sie ein rechtsschneidendes Werkzeug ergeben, d.h. eine Fräswirkung entsteht bei Rotation des Rings im Uhrzeigersinn. Die Zähne weisen gegenüber der Laufrichtung des Werkzeugs einen Anstellwinkel auf, der typischerweise im Bereich von 65 - 85 Grad liegt (entspricht einem Spanwinkel zwischen 5 und 25 Grad). In diesem Bereich ist typischerweise ein optimaler Kompromiss zwischen einer Maximierung der Schneidwirkung, mechanischer Stabilität der Zähne, manueller Handhabbarkeit des Werkzeugs, Laufruhe und Materialabtragungseffizienz gegeben. In einem Beispiel könnte zur Bearbeitung von Aluminium der Spanwinkel der Zähne -20 Grad, der Freiwinkel +10 Grad und der Drallwinkel im Kopfbereich 30 Grad nach rechts betragen. Vorzugsweise ist das Material der Zähne Wolframcarbid.

Der Anstellwinkel der Zahnbrust (Spanfläche) kann entsprechend der Tiefe der Zähne als Funktion der radialen Position homogen angepasst (z.B. geschliffen) werden. Damit könnte etwa durch einen kontinuierlichen Übergang von Abspanen (großer Spanwinkel nahe beim Befestigungsbereich) zu Abtransport (kleiner Spanwinkel nahe beim Kopfbereich) eine verbesserte Kontrolle der Spanbildung erreicht werden.

In einem Beispiel sind die Zähne des Werkzeugs mit einem Übergang der Zahntiefe von 4,5 mm am Kopfbereich auf 0,9 mm am Befestigungsbereich über eine Ringbreite von 27,5 mm ausgebildet. Mit dieser Geometrie könnte das Risiko einer Zusetzung der Spankammer verhindert werden.

Figur 2 zeigt eine perspektivische Seitenansicht des Werkzeugs aus Figur 1 von der zweiten, in Figur 1 vom Betrachter abgewandten Seite. Diese zweite Seite ist linksschneidend (fräst bei Rotation gegen den Uhrzeigersinn) und ebenfalls mit einem Rechtsdrall der Zähne ausgebildet. Bei einem Einbau des Werkzeugs wie in Figur 1 wäre dies die maschinenabgewandte Seite des Werkzeugs, mit der flächig Material gefräst werden kann (Flächen-Fräsring). Durch den Rechtsdrall könnten beim Flächenfräsen erzeugte Späne radial auswärts transportiert werden, was eine Zusetzung der Spankammer der Fräsmaschine verhindern könnte.

In einem Beispiel weist das Werkzeug 100 folgende Abmessungen auf: Außendurchmesser (gemessen zwischen den radial äußeren Endpunkten der Schneidkanten zweier gegenüberliegender Zähne 106): 181 mm; Außendurchmesser (gemessen zwischen den radial äußeren Endpunkten der Sohlen zweier gegenüberliegender Rillen): 178 mm; Innendurchmesser (gemessen zwischen den radial inneren Endpunkten der Schneidkanten zweier gegenüberliegender Zähne 106): 123 mm; Außendurchmesser des Befestigungsbereichs 200: 120 mm; Innendurchmesser des Befestigungsbereichs 200 (Durchmesser der Ringöffnung): 105 mm; Dicke des Werkzeugs 100 (gemessen zwischen den radial inneren Endpunkten der Schneidkanten zweier gegenüberliegender Zähne 106): 20 mm; Dicke des Befestigungsbereichs 200: 6 mm; erster Kreisradius: 2,5 mm; zweiter Kreisradius: 52,5 mm.

In einem anderen Beispiel weist das Werkzeug 100 folgende Abmessungen auf: Außendurchmesser (gemessen zwischen den radial äußeren Endpunkten der Schneidkanten zweier gegenüberliegender Zähne 106): 231 mm; Außendurchmesser (gemessen zwischen den radial äußeren Endpunkten der Sohlen zweier gegenüberliegender Rillen): 228 mm; Innendurchmesser (gemessen zwischen den radial inneren Endpunkten der Schneidkanten zweier gegenüberliegender Zähne 106): 173 mm; Außendurchmesser des Befestigungsbereichs 200: 167 mm; Innendurchmesser des Befestigungsbereichs 200 (Durchmesser der Ringöffnung): 152 mm; Dicke des Werkzeugs 100 (gemessen zwischen den radial inneren Endpunkten der Schneidkanten zweier gegenüberliegender Zähne 106): 20 mm; Dicke des Befestigungsbereichs 200: 6 mm; erster Kreisradius: 2,5 mm; zweiter Kreisradius: 52,5 mm.

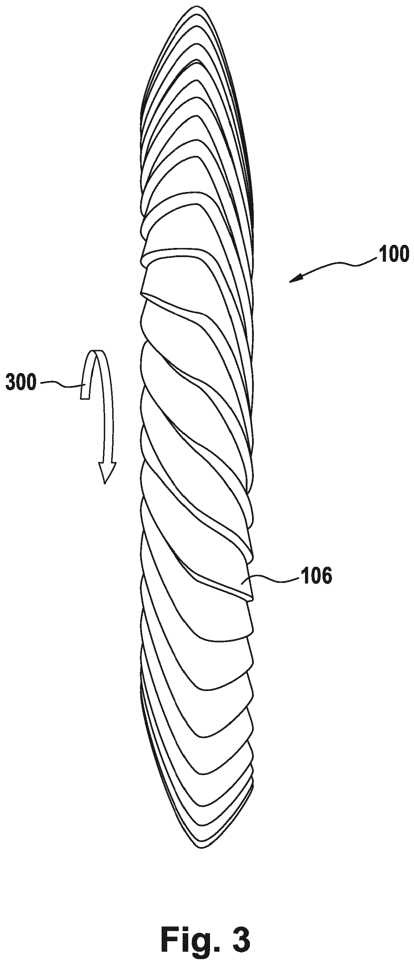

Figur 3 zeigt eine perspektivische Ansicht eines Werkzeugs 100, in der der Kopfbereich des Werkzeugs 100 dem Betrachter zugewandt ist. Die Zähne 106 des Werkzeugs 100 sind beidseitig mit einem Rechtsdrall ausgebildet und treffen im Scheitelpunkt jeweils paarweise mit ihren Schneidkanten in einem Winkel von 170 - 180 Grad aufeinander. In der gezeigten Orientierung des Werkzeugs ist die linke Seite rechtsschneidend und die rechte Seite linksschneidend, d.h. die Fräswirkung des Werkzeugs 100 entsteht bei Rotation in der Drehrichtung 300, bei der der dem Betrachter zugewandte Kopfbereich abwärts läuft. Bei Einbau des Werkzeugs 100 in eine Fräsmaschine mit (bei Blickrichtung vom Antrieb zum Werkzeug) im Uhrzeigersinn laufendem Antrieb wäre die linke Seite dem Antrieb zugewandt. Bei Verwendung des auf diese Weise eingebauten Werkzeugs 100 als Flächen-Fräsring zur Bearbeitung eines Werkstücks mit der rechten Stirnseite des Werkzeugs 100 könnten vorteilhaft die entstehenden Späne aufgrund des Rechtsdralls radial auswärts abgeführt werden.

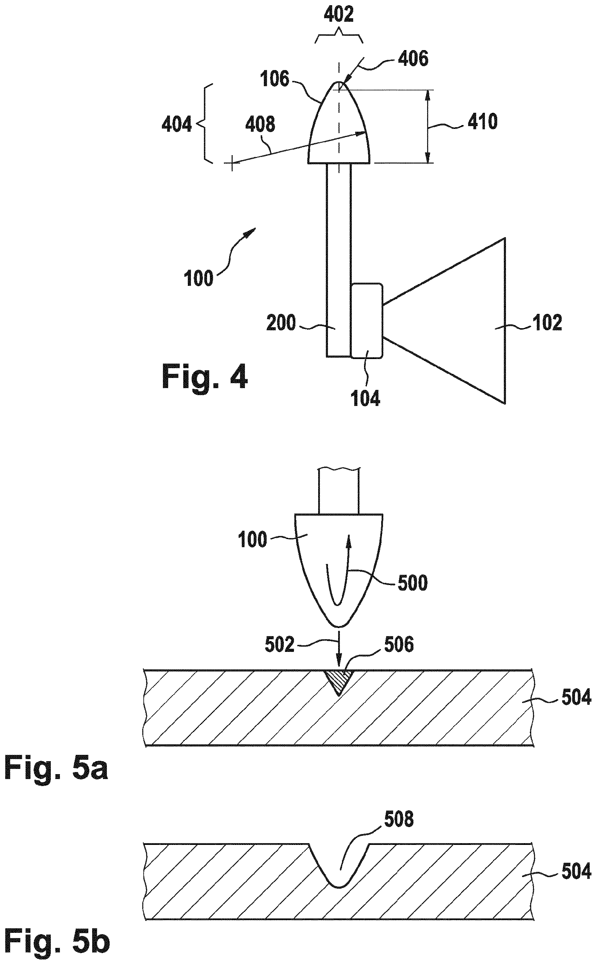

Figur 4 zeigt eine schematische Querschnittsansicht des Werkzeugs 100 der Figur 1, wobei nun ersichtlich ist, dass die Achse 104 an einen Befestigungsbereich 200 des Werkzeugs 100 angreift. Ferner ist in Figur 4 in der Querschnittsansicht der Schnitt durch einen einzelnen Zahn 106 ersichtlich, wobei sich der Zahn zumindest teilweise von der Kopfseite 402 über den Stirnbereich 404 des Werkzeugs erstreckt. In axialer Ringrichtung (also in der Figur 4 von links nach rechts) weist der Zahn 106 eine Bogenform mit einem Scheitelpunkt auf und er ist spiegelsymmetrisch zur durch den Scheitelpunkt gehenden Ringfläche des Werkzeugs ausgeformt. Die Zähne sind dadurch beiderseits am Werkzeug ausgebildet und die Zähne auf der linken Seite haben einen Rechtsdrall und sind linksschneidend, während die Zähne auf der rechten, dem Antriebselement zugewandten Seite, einen Rechtsdrall aufweisen und rechtsschneidend sind.

Die Bogenform ist in der Figur 4 durch zwei Kreise beschreibbar, welche konturlos tangential ineinander übergehen. Die durch die beiden Kreise beschreibbare Bogenform ist durch zwei Kreisradien definierbar, nämlich einen ersten Radius 406 und einen zweiten Radius 408. Durch das Verhältnis der beiden Radien von ungefähr einem Faktor 15 könnte sich eine besonders hohe Laufruhe des Werkzeugs beim durchzuführenden Materialabtrag ergeben.

Wie ferner in Figur 4 dargestellt ist, erstreckt sich der Zahn 106 nur bis ungefähr zum Kreismittelpunkt des zweiten Radius 404 im Stirnbereich 404. In radialer Richtung des Werkzeugs 100 ist dabei der Abstand 410 zwischen den 11 Kreismittelpunkten des ersten und des zweiten Kreisradius ungefähr die 0,6-fache Differenz des ersten und des zweiten Kreisradius.

Die Figur 5a zeigt ein Werkstück 504 mit einer Schweißnaht 506. Zum Öffnen der Schweißnaht, d.h. der Schweißwurzel, dient nun das Werkzeug 100, welches durch einen hier nicht dargestellten Antrieb in eine rotatorische Bewegung in Richtung 500 versetzt wird. Das Werkzeug 100 wird in Richtung 502 auf die Schweißnaht 506 aufgesetzt und trägt nun kontinuierlich Material ab.

Das Resultat ist in Figur 5b gezeigt, wobei die entstandene Fräskerbe 508 die Zahnform des Werkzeugs 100 aufweist. Die Fräskerbe 508 kann nun erneut verschweißt werden oder anderweitig mit Material verfüllt werden.

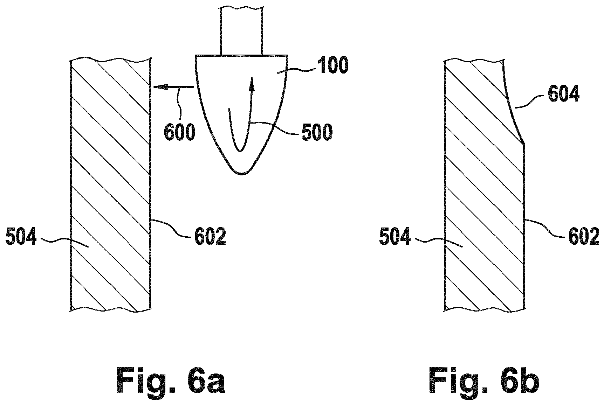

Die Figur 6a zeigt ein Werkstück 504 mit einer ebenen vertikalen Oberfläche 602. Das Werkzeug 100 wird nun zum Anfräsen der Oberfläche eingesetzt, z.B. um einen nachfolgenden Verschweißungsschritt vorzubereiten. Dazu wird das Werkzeug durch einen hier nicht dargestellten Antrieb in eine rotatorische Bewegung in Richtung 500 versetzt. Das Werkzeug 100 wird in Richtung 600 auf die Oberfläche 602 aufgesetzt und trägt nun kontinuierlich Material ab.

Das Resultat ist in Figur 6b gezeigt, wobei die entstandene Fräsfläche 604 die Zahnform des Werkzeugs 100 aufweist. Die Fräsfläche 604 kann nun beispielsweise mit einem zweiten Werkstück (nicht dargestellt) verschweißt werden, das auf analoge Weise an einer gegenüberliegenden Oberfläche mit einer Fräsfläche angefräst wurde. Beim Zusammenfügen der beiden Werkstücke bilden die beiden gegenüberliegenden Fräsflächen eine Kerbe, die dann beim Verschweißen mit Material verfüllt wird.

### Bezugszeichen

- 100: Werkzeug
- 102: Antriebselement
- 104: Achse
- 106: Zahn
- 108: Krümmung
- 200: Befestigungsbereich
- 300: Richtung
- 402: Kopfbereich
- 404: Stirnbereich
- 406: Erster Radius
- 408: Zweiter Radius
- 410: Abstand
- 500: Rotationsrichtung
- 502: Richtung
- 504: Werkstück
- 506: Schweißwurzel
- 508: Fräskerbe
- 600: Richtung
- 602: Oberfläche
- 604: Fräsfläche

## Patentansprüche

1. Ringförmiges Werkzeug (100) zur Bearbeitung eines Werkstücks (504), wobei das Werkzeug (100) einen zu seiner Ringform zentrierten Befestigungsbereich (200) zur Befestigung an einer rotierbaren Antriebsachse (104) aufweist, wobei das Werkzeug (100) Schneidezähne (106) aufweist, wobei sich die Zähne (106) beidseitig des Werkzeugs (100) jeweils vom Kopfbereich (402) des Werkzeugs (100) in Richtung zum Befestigungsbereich (200) hin erstrecken, wobei die Zähne (106) der einen Seite in Blickrichtung entlang der Drehachse auf die eine Seite einen Rechtsdrall aufweisen und rechtsschneidend sind, wobei die Zähne (106) der anderen Seite in Blickrichtung entlang der Drehachse auf die andere Seite linksschneidend sind, **dadurch gekennzeichnet, dass** die Zähne der anderen Seite einen Rechtsdrall aufweisen.

2. Werkzeug (100) nach Anspruch 1, wobei der Arbeitsbereich des Werkzeugs (100) durch den Kopfbereich (402) und die Seiten gegeben ist, welche die Zähne (106) aufweisen.

3. Werkzeug (100) nach Anspruch 1 oder 2, wobei im Kopfbereich (402) jeweils in einem Schnittpunkt die Schneidkante eines Zahns (106) der einen Seite und die Schneidkante eines Zahns (106) der anderen Seite unter einem Winkel von 170 - 180 Grad, gemessen in einer durch den Schnittpunkt gehenden Tangentialebene der Ringform, ineinander übergehen.

4. Werkzeug (100) nach einem der vorigen Ansprüche, wobei die Zähne (106) in axialer Richtung des Werkzeugs eine Bogenform mit einem Scheitelpunkt im Kopfbereich (402) aufweisen, wobei auf einer der Seiten die Bogenform durch zwei konturlos tangential ineinander übergehende Kreise gegeben ist mit einem ersten Kreisradius (406) und einem zweiten Kreisradius (408), wobei der Kreismittelpunkt für den ersten Kreisradius (406) unterhalb des Scheitelpunkts liegt und wobei der Kreismittelpunkt für den zweiten Kreisradius (408) in radialer Richtung unterhalb des Kreismittelpunkts für den ersten Kreisradius (406) liegt, wobei der erste Kreisradius (406) kleiner ist als der zweite Kreisradius (408).

5. Werkzeug (100) nach Anspruch 4, wobei in radialer Richtung des Werkzeugs (100) der Abstand (410) zwischen den Kreismittelpunkten des ersten Kreisradius (406) und des zweiten Kreisradius (408) zwischen der 0,5- und 0,7-fachen Differenz des ersten Kreisradius (406) und des zweiten Kreisradius (408) beträgt.

6. Werkzeug (100) nach Anspruch 4 oder 5, wobei das Verhältnis des zweiten Kreisradius (408) zu dem ersten Kreisradius (406) zwischen 10 und 20 liegt.

7. Werkzeug (100) nach Anspruch 6, wobei das Verhältnis des zweiten Kreisradius (408) zu dem ersten Kreisradius (406) zwischen 14 und 17 liegt.

8. Werkzeug (100) nach einem der vorigen Ansprüche, wobei der Drall über die Seiten des Werkzeugs (100) hinweg konstant ist.

9. Werkzeug (100) nach einem der vorigen Ansprüche, wobei für jede der Seiten die Schneidetiefe der jeweiligen Zähne (106) vom Kopfbereich (402) ausgehend in Richtung zum Befestigungsbereich (200) hin stetig abnimmt.

10. Werkzeug (100) nach Anspruch 9, wobei die Schneidetiefe der an den Befestigungsbereich (200) angrenzenden Teile der Zähne (106) um einen Faktor 4 - 6 geringer ist als die Schneidetiefe der jeweiligen Teile der Zähne (106) im Kopfbereich (402).

11. Verwendung eines Werkzeugs (100) nach einem der vorigen Ansprüche für den Einsatz bei Handwerkzeugen oder bei spanabhebenden Maschinen, wobei bei dem Einsatz das Werkzeug (100) wahlweise kopfseitig oder mit einer der Seiten auf ein zu bearbeitendes Werkstück (504) aufgebracht wird.

## Claims

1. A ring-shaped tool (100) for processing a workpiece (504), wherein the tool (100) has a fastening region (200) which is centred with its ring shape for fastening to a rotatable drive shaft (104), wherein the tool (100) has cutting teeth (106), wherein the teeth (106) extend on both sides of the tool (100) in each case from the head region (402) of the tool (100) in the direction of the fastening region (200), wherein the teeth (106) on one side, as viewed along the rotation axis on the one side, have a right-hand twist and provide right-hand cutting, wherein the teeth (106) on the other side, as viewed along the rotation axis on the other side, provide left-hand cutting, **characterised in that** as claimed in the teeth on the other side have a right-hand twist.

2. The tool (100) according to claim 1, wherein the working region of the tool (100) is given by the head region (402) and the sides having the teeth (106).

3. The tool (100) according to claim 1 or 2, wherein the cutting edge of a tooth (106) on one side and the cutting edge of a tooth (106) on the other side transition into one another in the head region (402) in each case at a point of intersection at an angle of 170 - 180 degrees, measured in a tangential plane of the ring shape passing through the point of intersection.

4. The tool (100) according to one of the preceding claims, wherein the teeth (106) in the axial direction of the tool have an arch shape with an apex in the head region (402), wherein the arch shape is provided on one of the sides by two circles that transition tangentially into one another contourlessly, with a first circle radius (406) and a second circle radius (408), wherein the circle centre for the first circle radius (406) lies beneath the apex, and wherein the circle centre for the second circle radius (408) lies beneath the circle centre for the first circle radius (406) as viewed in the radial direction, wherein the first circle radius (406) is smaller than the second circle radius (408).

5. The tool (100) according to claim 4, wherein, as viewed in the radial direction of the tool (100), the distance (410) between the circle centres of the first circle radius (406) and of the second circle radius (408) is between 0.5 and 0.7 times the difference between the first circle radius (406) and the second circle radius (408).

6. The tool (100) according to claim 4 or 5, wherein the ratio of the second circle radius (408) to the first circle radius (406) is between 10 and 20.

7. The tool (100) according to claim 6, wherein the ratio of the second circle radius (408) to the first circle radius (406) is between 14 and 17.

8. The tool (100) according to one of the preceding claims, wherein the twist is constant over the sides of the tool (100).

9. The tool (100) according to one of the preceding claims, wherein for each of the sides the cutting depth of the corresponding teeth (106) decreases continuously starting from the head region (402) in the direction of the fastening region (200).

10. The tool (100) according to claim 9, wherein the cutting depth of the parts of the teeth (106) adjacent to the fastening region (200) is 4 - 6 times smaller than the cutting depth of the corresponding parts of the teeth (106) in the head region (402).

11. Use of a tool (100) according to one of the preceding claims for use in hand tools or in cutting machines, wherein, during use, the tool (100) is applied optionally on the head side or by one of the sides to a workpiece (504) that is to be processed.

## Revendications

1. Outil annulaire (100) pour l'usinage d'une pièce (504), où l'outil (100) présente une zone de fixation (200) centrée par rapport à sa forme annulaire pour la fixation sur un axe d'entraînement (104) rotatif, où l'outil (100) présente des dents de coupe (106), où les dents (106) s'étendent des deux côtés de l'outil (100) respectivement à partir d'une zone frontale (402) de l'outil (100) en direction de la zone de fixation (200), où les dents (106) d'un côté présentent, dans la direction visuelle le long de l'axe de rotation, une torsion à droite sur un côté et sont coupantes à droite, où les dents (106) de l'autre côté dans la direction visuelle le long de l'axe de rotation, sont coupantes à gauche sur l'autre côté, **caractérisé en ce que** les dents de l'autre côté présentent une torsion à droite.

2. Outil (100) selon la revendication 1, dans lequel la zone de travail de l'outil (100) est donnée par la zone frontale (402) et les côtés, lesquels présentent les dents (106).

3. Outil (100) selon la revendication 1 ou la revendication 2, dans lequel, dans la zone frontale (402), respectivement au niveau d'un point d'intersection, le bord coupant d'une dent (106) d'un côté et le bord coupant d'une dent (106) de l'autres côté se mettent en prise en se superposant sous un angle de 170 à 180 degrés, mesuré dans un plan tangentiel de la forme annulaire passant par le point d'intersection.

4. Outil (100) selon l'une des revendications précédentes, dans lequel les dents (106) présentent une forme en arc avec un sommet dans la zone frontale (402) dans la direction axiale de l'outil, où, sur un des côtés, la forme en arc est donnée par deux cercles se superposant l'un dans l'autre de manière tangentielle sans contour avec un premier rayon de cercle (406) et un deuxième rayon de cercle (408), où le centre du cercle pour le premier rayon de cercle (406) se situe en-dessous du sommet et où le centre du cercle pour le deuxième rayon de cercle (408) se situe dans la direction radiale en-dessous du centre du cercle pour le premier rayon de cercle (406), où le premier rayon de cercle (406) est inférieur au deuxième rayon de cercle (408).

5. Outil (100) selon la revendication 4, dans lequel, dans la direction radiale de l'outil (100), la distance (410) entre les centres des cercles du premier rayon de cercle (406) et du deuxième rayon de cercle (408) est entre 0,5 et 0,7 fois la différence entre le premier rayon de cercle (406) et le deuxième rayon de cercle (408).

6. Outil (100) selon la revendication 4 ou la revendication 5, dans lequel le rapport du deuxième rayon de cercle (408) sur le premier rayon de cercle (406) se situe entre 10 et 20.

7. Outil (100) selon la revendication 6, dans lequel le rapport du deuxième rayon de cercle (408) sur le premier rayon de cercle (406) se situe entre 14 et 17.

8. Outil (100) selon l'une des revendications précédentes, dans lequel la torsion est constante en partant par-dessus les côtés de l'outil (100).

9. Outil (100) selon l'une des revendications précédentes, dans lequel la profondeur de coupe des dents (106) respectives diminue de manière continue pour chacun des côtés en partant de la zone frontale (402) en direction de la zone de fixation (200).

10. Outil (100) selon la revendication 1, dans lequel la profondeur de coupe des parties des dents (106) à la limite de la zone de fixation (200) est inférieure d'un facteur 4 à 6 à la profondeur de coupe des parties respectives des dents (106) dans la zone frontale (402).

11. Utilisation d'un outil (100) selon l'une des revendications précédentes pour la mise en oeuvre d'outils d'usinage ou pour des machines par enlèvement de copeaux, où, lors de la mise en œuvre, l'outil (100) est agencé ; au choix, du côté frontal, soit avec un des côtés sur une pièce (504) à usiner.
